# EUROPÄISCHE PATENTSCHRIFT

(11) **EP 2 217 535 B1**
(45) Veröffentlichungstag und Bekanntmachung des Hinweises auf die Patenterteilung: **18.05.2011**
(21) Anmeldenummer: 08852231.3
(22) Anmeldetag: 20.11.2008
(51) Int. Cl.: C02F 3/12

(54) **KOMPAKTE HEBERANORDNUNG**
COMPACT LIFT ARRANGEMENT
SYSTÈME COMPACT DE SIPHONS

(30) Priorität: 22.11.2007 DE 202007000048 U
(43) Veröffentlichungstag der Anmeldung: 18.08.2010
(73) Patentinhaber: Solid Clair Watersystems Gmbh&co. Kg, 21614 Buxtehude (DE)
(72) Erfinder: STEFFENS, Hinrich, 27374 Visselhövede (DE); THIEM, Bernd, 21629 Neu Wulmstorf (DE)
(74) Vertreter: Hansen, Jochen
(86) Internationale Anmeldenummer: PCT/DE2008/075012
(87) Internationale Veröffentlichungsnummer: WO 2009/065402

(56) Entgegenhaltungen:
- EP-A- 1 582 263
- DE-A1- 10 048 309
- DE-A1- 19 830 647
- DE-A1-102005 056 114
- DE-U1-202005 003 588
- DE-U1-202005 019 918
- DE-U1-202006 000 564
- DE-U1-202006 019 719

## Beschreibung

Die Erfindung betrifft eine Heberanordnung für SBR-Kleinkläranlagen mit einem Klärbehälter, in dem mindestens eine Vorklärkammer und mindestens eine Belebungskammer sowie eine beide Kammern trennende Trennwand angeordnet sind, mit wenigstens drei Drucklufthebern, nämlich einem Beschickungsheber, einem Schlammrückführungsheber, die jeweils die Trennwand überbrückend im Klärbehälter angeordnet sind, und einem Klarwasserheber, wobei der Beschickungsheber einen ersten Zulauf in der Vorklärkammer, eine erste Steigeleitung sowie ein erstes Tauchrohr zum beruhigten Einlauf in die Belebungskammer, der Schlammrückführungsheber einen zweiten Zulauf in der Belebungskammer, eine zweite Steigleitung sowie ein zweites Tauchrohr zum beruhigten Rücklauf des geförderten Schlamms in die Vorklärkammer und der Klarwasserheber einen dritten Zulauf in der Belebungskammer sowie eine dritte Steigleitung aufweisen.

Im Bereich der Abwasserreinigung gibt es verschiedene Verfahren, die eine biologische Abwasserreinigung in einem Klärbehälter erlauben. Ein kontinuierliches Abwasserreinigungsverfahren wird in wenigstens drei getrennten Becken durchgeführt, nämlich einmal in einem Vorklärbecken, einer biologischen Stufe und einem Nachklärbecken, die nacheinander durchströmt werden. Ferner erfolgt beim sog. SBR-Verfahren (Sequenz-Batch-Reaktor) die biologische Abwasserbehandlung chargenweise in einer Belebtschlammkammer in zeitlich aufeinander folgenden Schritten. Derartige SBR-Kläranlagen weisen meist ein Vorklärbecken und eine gemeinsame biologische Reinigungs- und Nachklärstufe (SBR-Becken oder Belebungskammer) auf.

Beim SBR-Klärverfahren ist zu Beginn eines Zykluses das SBR-Becken zu etwa 30 % bis 50 % mit sog. Belebtschlamm befüllt. Dieser Belebtschlamm sorgt im Zusammenhang mit einer Belüftung für die biologische Reinigung des Abwassers. Das Abwasser wird dabei kontinuierlich dem SBR-Becken aus dem Vorklärbecken bis zu einem Füllstand von 100 % zugeführt. Im Vorklärbecken erfolgt eine Vorreinigung des Abwassers, bei dem feste und gröbere Bestandteile des Abwassers sedimentieren und den sog. Primärschlamm bilden. In dieser ersten Phase füllt sich das SBR-Becken langsam mit dem vorgereinigten Abwasser. Dabei wird im SBR-Becken mit einem sog. Belüfter intermittierend belüftet.

In der zweiten Phase wird der sich im Abwasser in dem SBR-Becken noch befindliche Schlamm in einer Absetzphase ohne Belüftung sedimentiert. Über dem Schlamm bildet sich eine Klarwasserzone. Nach der Absetzphase wird das im oberen Teil des SBR-Beckens befindliche Klarwasser bis zu einem voreinstellbaren Füllstand von beispielsweise 60 % bis 80 % abgezogen. Der bei diesem Prozess neu hinzutretende Schlamm erfordert dann in der 4. Phase eine Schlammrückführung zum Vorklärbecken.

Um einerseits die Beschickung des SBR-Beckens mit vorgeklärtem Abwasser, den Abzug von Klarwasser aus dem SBR-Becken sowie die Schlammrückführung vom SBR-Becken in das Vorklärbecken zu realisieren, sind in den bekannten SBR-Kleinkläranlagen insgesamt drei Hebevorrichtungen, meist als Druckluftheber ausgebildet, vorzusehen. Die Hebevorrichtungen heben das jeweilige zu fördernde fluide Medium über die Trennwand zwischen Vorklär- und SBR-Becken bzw. in den Klarwasserablauf. Da derartige Hebevorrichtungen hinsichtlich ihres Flüssigkeitseinlaufs und -ablaufs sehr sensibel in ihrer Höhenlage sind, gleichzeitig jedoch auch bei Wartungsarbeiten aus dem Behälter entnehmbar sein müssen, ist eine gemeinsame Halterung der Hebevorrichtungen an einem Gestell bekannt. Beispielhaft wird auf die deutschen Gebrauchsmuster DE 20 2005 003 588 U1 und DE 20 2006 000 564 U1 verwiesen.

Die DE 20 2005 003 588 U1 gibt für einen rationelleren Einbau die Lösung vor, dass die jedem Druckluftheber zugeordnete, an ein Druckluftaggregat angeschlossene Druckluftleitung in einer Hebeleitung angeordnet ist, wobei das Medium durch den zwischen der Außenwandung der Druckluftleitung und der Innenwand der Hebeleitung gebildete Zwischenraum förderbar ist. Ferner ist der Druckluftheber in einem Mantelrohr angeordnet, das an eine Kammerwand des Klärbehälters angehängt werden kann. Das Mantelrohr, das einen oder mehrere Druckluftheber beinhaltet, weist Ausnehmungen (Öffnungen) auf, die als Grobfilter dienen, durch den Grobteile aus dem Abwasser beim Fördern des Mediums mittels der Druckluftheber zurückgehalten werden.

Aus der DE 20 2006 000 564 U1 ist eine Einbauhalterung für Elemente einer Vorrohrung einer Kläranlage bekannt, an der die jeweils einzeln erforderlichen Hebevorrichtungen, hier ebenfalls Druckluftheber, angeordnet sind. Mit dieser Anbauhalterung soll eine einfachere und kostengünstigere Montage und eine zuverlässige Halterung der Elemente der Verrohrung gewährleistet sein.

Aus der DE 198 30 647 A1 ist ein Verfahren und eine Anordnung zur biologischen Behandlung von Flüssigkeiten bekannt, bei dem Abwässer einer Kläranlage, insbesondere aus einzelnen Haushalten, vollbiologisch behandelt werden. Hierzu wird in einem Schlammspeicher ein Rohabwasserspeicher angeordnet und durch einen Durchbruch im Mantel des Rohwasserspeichers eine Verbindung zwischen beiden hergestellt, wobei bei Bedarf ein Flüssigkeitsausgleich statt finden kann, wodurch die Aufrechterhaltung der Biologie bei länger analtender Unterbrechung der Rohabwasserzufuhr gewährleistet bleibt.

Weiter ist aus der DE 100 48 309 A1 eine Kleinkläranlage zur biologischen Abwasserreinigung nach dem SBR-Verfahren bekannt, bei der mehrere Kammern miteinander verbindbar sind und wobei mit Hilfe einer Saug-Pumpanordnung, wobei die Saugseite der Anordnung in deren Position verstellbar ist, Materialien und Flüssigkeiten von einer Kammer in eine andere Kammer gepumpt werden können.

Der DE 10 2005 056 114 A1 ist ein Verfahren und eine Vorrichtung zur Entkeimung von Abwasser in Abwasserbehandlungsanlagen, bspw. in Kleinkläranlagen und kleinen Kläranlagen mit dem SBR-Verfahren, zu entnehmen, bei der mit Hilfe von ultra-violettem Licht eine Behandlung von zu klärenden Abwässern erfolgt.

Aus der EP 1 582 263 A1 ist eine Drucklufthebeanlage für fließfähige Medien bekannt, die zum Überführen von Abwässern aus einer Kammer einer Kleinkläranlage in eine andere Kammer dient. Hierbei weist die vorgesehene Rohrleitung einen im Wesentlichen U- oder V-förmigen Rohrabschnitt und zusätzlich weitere Leitungsabschnitte auf.

Weiter ist aus der DE 20 2006 19719 U1 eine Vorrichtung zur exakten Messung in Abwasserbehandlungsanlagen bekannt. Hierbei wird ein Drucksensor an luftführenden Komponenten angeordnet, so dass dieser nach der Abschaltung der Luftzufuhr der entsprechenden Komponente eine Messung durchführt.

Aufgabe der Erfindung ist es, eine Heberanordnung für eine SBR-Kläranlage mit den dafür erforderlichen drei Drucklufthebern anzugeben, die besonders kompakt ist, einen großen Grad der Vorfertigung erlaubt und die Zuverlässigkeit der Kläranlage verbessert.

Diese Aufgabe wird bei einer Heberanordnung der eingangs geschilderten Art dadurch erreicht, dass ein erstes, einen ersten Strömungskanal bildendes, hohles Formteil vorgesehen ist, in das die erste Steigleitung in einen höchsten Punkt des ersten Strömungskanals einmündet und bei dem ein erster abwärts gerichteter Abschnitt des ersten Strömungskanals das erste Tauchrohr bildet, wobei der abwärts gerichtete Abschnitt des ersten Strömungskanals einen erweiterten Querschnitt hat und darin der dritte Zulauf in vorgegebener Höhenlage angeordnet ist und/oder ein zweites, einen zweiten Strömungskanal bildendes, hohles Formteil vorgesehen ist, in das die zweite Steigleitung in einen zweiten höchsten Punkt des zweiten Strömungskanals einmündet und bei dem ein zweiter abwärts gerichteter Abschnitt des zweiten Strömungskanals das zweite Tauchrohr bildet, wobei der zweite abwärts gerichtete Abschnitt des zweiten Strömungskanals einen erweiterten Querschnitt hat und darin der erste Zulauf in vorgegebener Höhenlage angeordnet ist.

Bei einer derartigen Heberanordnung wird mit dem erfindungsgemäßen Formteil ein Strömungskanal gebildet, in dem ein über eine Steigleitung emporgefördertes Medium beruhigt in die andere Kammer des Klärbehälters gefördert werden kann. Das besondere liegt darin, dass in dem abwärts gerichteten Abschnitt des Strömungskanals, der einen erweiterten Querschnitt hat, ein Zulauf eines weiteren Drucklufthebers angeordnet ist. Damit wird mit diesem Formteil neben der Strömungsführung des darin geförderten Mediums zusätzlich im abwärts gerichteten Abschnitt eine Tauchwandfunktion nachgebildet, womit vermieden wird, dass in der jeweiligen Kammer aufschwimmende Bestandteile im Klärwasser unerwünscht durch den Heber angesogen werden. Zusätzliche, gesondert angeordnete Vorrichtungen, beispielsweise wie eine Tauchwand oder -folie sind bei dieser Ausgestaltung nicht erforderlich.

Weiter wird der jeweilige Zulauf in dem Formteil vor Beschädigungen, Verstellungen seiner Höhenlage und ähnlichen Beeinträchtigungen geschützt. Bevorzugt ist dabei die Ausgestaltung mit zwei Formteilen gemäß Anspruch 3, da mit dem ersten Formteil ein geschützter Zulauf (dritter Zulauf) für den Klarwasserheber auf der Seite der Belebungskammer und mit dem zweiten Formteil ein geschützter Zulauf (erster Zulauf) für den Beschickungsheber in der Vorklärkammer verwirklicht werden. Die erfindungsgemäßen Formteile erfüllen somit eine Dreifachfunktion, nämlich sie dienen
a) der Medienführung als Strömungskanal,
b) der lagerichtigen Halterung der darin angeordneten Zuläufe und
c) der Abschottung von Oberflächenbereichen quasi als Tauchwandersatz.

Bevorzugt weisen das erste und/oder zweite Formteil einen im Einbauzustand umgekehrt L-förmigen Strömungskanal auf, mit einem die Trennwand des Behälters überbrückenden, im Wesentlichen horizontalen Abschnitt und dem abwärtsgerichteten Abschnitt, der das zugeordnete Tauchrohr bildet. Der im Wesentlichen horizontale Abschnitt des jeweiligen Formteils kann dabei neben der Medienführung von der Steigleitung zum abwärts gerichteten Abschnitt zusätzlich als Halterung dienen, der auf der zu überbrückenden Trennwand auflegbar ist.

Wenn das erste und zweite Formteil formidentisch sind und Kuppelmittel vorgesehen sind, mit denen beide Formteile im Bereich der horizontalen Abschnitte miteinander verbindbar sind, können die beiden Formteile mit einer Herstellungsform hergestellt werden, womit Herstellungskosten und Lagerhaltung reduziert werden. Durch die Verbindung der beiden Formteile mit Kuppelmitteln ist eine kompakte Zusammenstellung der beiden Bestandteile der Heberanordnung erlaubt.

Wenn mit den Kuppelmitteln der lichte Abstand zwischen den gegenüberstehenden, abwärts gerichteten Abschnitten beider Formteile einstellbar ist, kann die Anordnung auf die Wandstärke der zu überbrückenden Trennwand angepasst werden. Insbesondere bei Nachrüstung vorhandener Klärbehälter können erhebliche Schwankungen in der Trennwandstärke auftreten. Mit der Einstellbarkeit des lichten Abstandes kann die Heberanordnung optimal an die vorhandenen Gegebenheiten angepasst werden.

Dadurch, dass am ersten Formteil außenseitig die zweite sowie die dritte Steigleitung und/oder am zweiten Formteil die erste Steigleitung mit jeweils zugeordneten Druckluftzuleitungen befestigt sind, wird ein hoher Grad an Vorfertigung für die Heberanordnung ermöglicht. Sämtliche Bestandteile der Heberanordnung sind so miteinander verbunden und an den stabil ausgebildeten Formteilen befestigt, so dass der Installationsaufwand beim Einbau der Anordnung in den Klärbehälter minimal ist. Es müssen lediglich die Druckluftzuleitungen an eine entsprechende Steuerung sowie der Ausgang der dritten Steigleitung des Klarwasserhebers an den Klarwasserablauf der Kläranlage angeschlossen werden.

Wenn am ersten Formteil außenseitig am ersten Tauchrohr ein Belüfter mit zugeordneter Druckluftzuleitung angeordnet ist, gehört zur kompakten

Heberanordnung auch der Belüfter für die Belebungskammer. Der Vorfertigungsgrad ist damit noch weiter erhöht.

Um die Heberanordnung in dem vorgefertigten Zustand bequem in den Klärbehälter einbringen zu können, ist sein maximaler horizontaler Querschnitt kleiner als die Mannlochöffnung des Klärbehälters. Die vorgefertigte Heberanordnung kann somit ohne Montageaufwand durch die Mannlochöffnung des Klärbehälters eingeführt und über die Trennwand reitend aufgesetzt werden.

Um anschließend die Druckluftzuleitungen für die drei Heber und optional für den Belüfter schnell an die Druckluftsteuerung anschließen zu können, weisen die Druckluftzuleitungen Schnellkupplungen auf.

Bevorzugt sind die Formteile aus PE hergestellt. Da das erste und das zweite Formteil formidentisch sind, ist lediglich eine Herstellungsform erforderlich. Beispielsweise können die Formteile im sog. Rotationssintern hergestellt werden.

Wenn eine Rücklaufsperre im dritten Zulauf angeordnet ist, wird vermieden, dass während der Belüftungsphase Belebtschlamm in den dritten Zulauf des Klarwasserhebers absinken und am Beginn des Klarwasserabzugs dieser Belebtschlamm als Schmutzfracht in den Ablauf gelangen kann. Die Rücklaufsperre verschließt diesen dritten Zulauf, solange keine Klarwasserförderung über den Klarwasserheber erfolgt. Ein derartig ausgebildeter Klarwasserheber ist in der DE 20 2005 019 918 beschrieben.

Dadurch, dass in der Trennwand auf Höhe des maximalen Füllstandes der Vorklärkammer ein Notüberlauf vorgesehen ist, wobei das zweite Formteil mit seinem zweiten abwärts gerichteten Abschnitt unmittelbar vor dem Notüberlauf angeordnet ist und koinzidierend zum Notüberlauf eine Öffnung aufweist, wird auch für den Notüberlauf eine Tauchwandfunktion mit dem zweiten abwärts gerichteten Abschnitt des zweiten Formteils realisiert. Im Falle eines Notüberlaufs wird vermieden, dass in der Vorklärkammer aufschwimmende Bestandteile überlaufen und somit Gewässer verschmutzen.

Wenn das erste Formteil mit seinem ersten abwärts gerichteten Abschnitt unmittelbar hinter dem Notüberlauf angeordnet ist und koinzidierend zum Notüberlauf eine Öffnung aufweist, kann eine geschützte Überlauffunktion auch bei einer Konstellation mit zwei einander gegenüberstehenden Formteilen realisiert werden.

Nachfolgend wird die Erfindung anhand eines Ausführungsbeispiels unter Bezugnahme auf die beiliegenden Zeichnungen detailliert beschrieben.

Darin zeigt:
- Fig. 1: eine schematische Darstellung des Aufbaus der Heberanordnung,
- Fig. 2: eine räumliche Ansicht eines Ausführungsbeispiels der Heberan- ordnung, in der die in Fig. 1 dargestellten Strömungswege realisiert sind, und
- Fig. 3: eine räumliche Ansicht der Heberanordnung gemäß Fig. 2, jedoch mit einem angesetzten Belüfter.

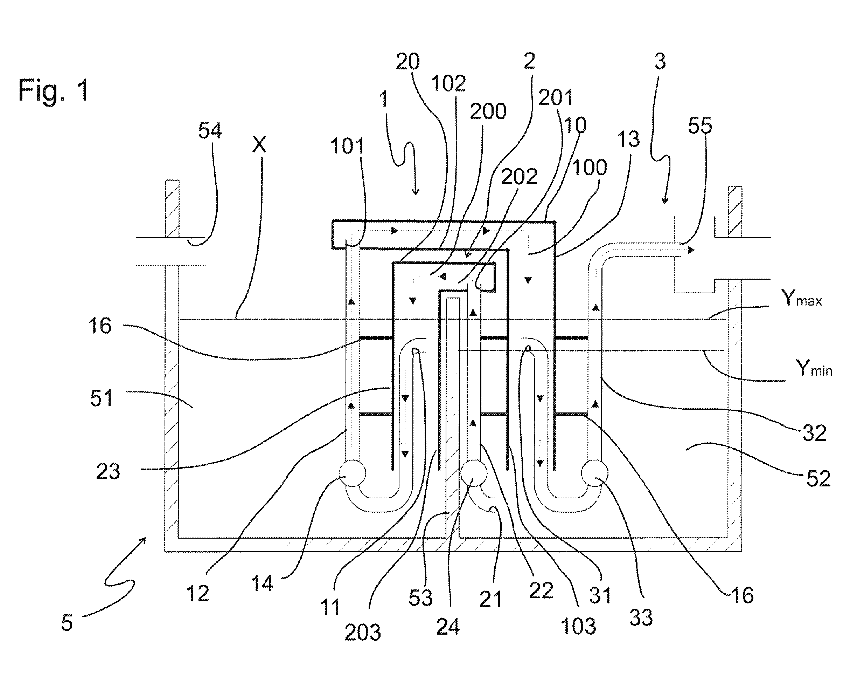

In Fig. 1 ist eine schematische Darstellung der erfindungsgemäßen Heberanordnung mit seinen Strömungswegen wiedergegeben. Die Heberanordnung ist in einem im Querschnitt angedeuteten Klärbehälter 5 dargestellt. Der Klärbehälter 5 weist eine Vorklärkammer 51, eine Belebungskammer 52 und eine die Vorklärkammer 51 von der Belebungskammer 52 trennende Trennwand 53 auf. In die Vorklärkammer 51 mündet ein Abwasserzulauf 54 für die Zuführung von zu reinigenden Abwasser. Der Belebungskammer 52 ist ein Klarwasserablauf 55 zugeordnet, der das Klarwasser nach Abschluss der Reinigung abführt.

Auf der Trennwand 53 des Klärbehälters 5 reitend ist eine erfindungsgemäße Heberanordnung schematisch dargestellt. Die Heberanordnung weist einen Beschickungsheber 1, einen Schlammrückführungsheber 2 und einen Klarwasserheber 3 auf. Diese Heber sind als Druckluftheber ausgebildet.

Der Beschickungsheber 1 weist einen ersten Zulauf 11, der in der Vorklärkammer 51 nahe am Füllstand X der Vorklärkammer 51 angeordnet ist, auf. Stromabwärtig in dem Beschickungsheber 1 ist dann eine erste Steigleitung 12 ausgebildet, in die eine erste Druckluftzuführung 14 kurz hinter dem tiefsten Bogen angesetzt ist. Die erste Steigleitung 12 führt in ein erstes, Formteil 10 des Beschickungshebers 1, das im Wesentlichen L-Form aufweist. Das erste Formteil 10 ist hohl und bildet mit seinem Hohlraum einen ersten Strömungskanal 100. Die erste Steigleitung 12 mündet an einem ersten höchsten Punkt 101 in diesen ersten Strömungskanal 100. Der erste Strömungskanal 100 weist zunächst einen im Wesentlichen horizontalen ersten Abschnitt 102, entsprechend dem kürzeren Schenkel eines auf dem Kopf stehenden "L" und einem ersten abwärts gerichteten Abschnitt 103 auf. Der erste abwärts gerichtete Abschnitt 103 weist einen gegenüber dem ersten horizontalen Abschnitt 102 aufgeweiteten Querschnitt auf.

Der Schlammrückführungsheber 2 hat einen zweiten Zulauf, der nahe am Boden der Belebungskammer 52 angeordnet ist. Vom zweiten Zulauf 21 führt eine zweite Steigleitung 22 nach oben, wobei in Strömungsrichtung kurz hinter dem zweiten Zulauf 21 eine zweite Druckluftzuführung 24 angeordnet ist. Die zweite Steigleitung 22 mündet in ein zweites Formteil 20 an einem zweiten höchsten Punkt 201. Das zweite Formteil 20 ist ebenso wie das erste Formteil 10 hohl und umgekehrt L-förmig ausgebildet. Im Hohlraum des zweiten Formteils 20 ist ein zweiter Strömungskanal 200 ausgeformt, der ebenfalls einen zweiten horizontalen Abschnitt 202 und zweiten abwärts gerichteten Abschnitt 203 aufweist. Der zweite abwärts gerichtete Abschnitt 203 ist in seinem Querschnitt ebenfalls aufgeweitet gegenüber dem zweiten horizontalen Abschnitt 202. In diesem zweiten abwärts gerichteten Abschnitt 203 ist der Zulauf 11 des Beschickungshebers 1 abgeschirmt vom übrigen Bereich der Vorklärkammer 51 angeordnet.

Andererseits ist im ersten abwärts gerichteten Abschnitt 103 im Bereich der Belebungskammer 52 ein dritter Zulauf 31 auf Höhe des minimalen

Füllstandes Yₘᵢₙ der Belebungskammer 52 angeordnet. Der dritte Zulauf 31 gehört zum Klarwasserheber 3, der in Strömungsrichtung vom dritten Zulauf 31 eine dritte Steigleitung 32 hat, die kurz hinter dem tiefsten Punkt eine dritte Druckluftzuführung 33 aufweist. Die dritte Steigleitung 32 führt zum Klarwasserablauf 55 des Klärbehälters 5.

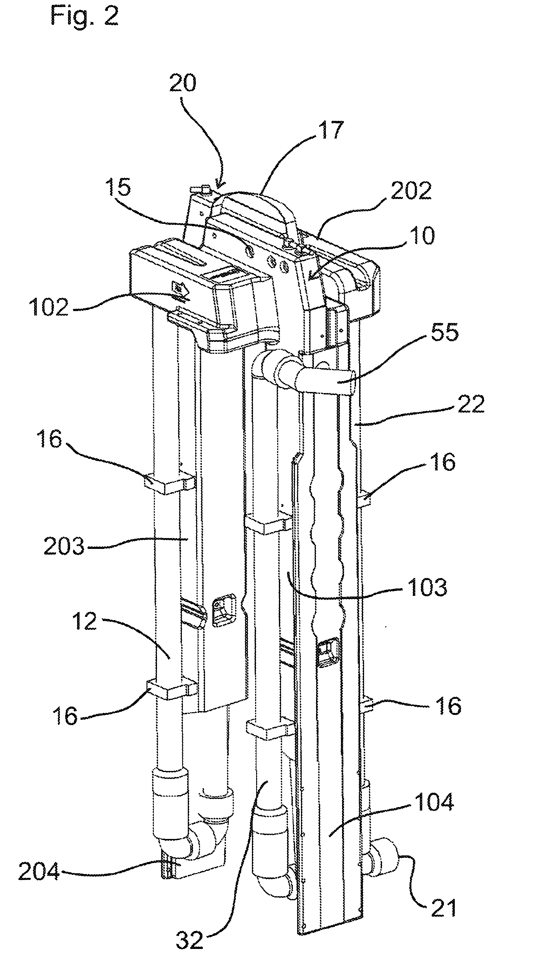

In Fig. 2 ist ein räumlicher Ansicht eine derartige Heberanordnung in einer realen Ausführungsform dargestellt. Das erste Formteil 10 und das zweite Formteil 20 sind dabei formidentisch als PE-Formteile im Rotationssintern hergestellt. Die beiden Formteile 10, 20 sind über ein einstellbares Kupplungsmittel 15 miteinander verbunden. Je nach Fixierung des Kupplungsmittels 15 können verschiedene lichte Abstände zwischen den beiden einander gegenüberstehenden abwärts gerichteten Abschnitten 103, 203 der beiden Formteile 10, 20 erreicht werden. An den abwärts gerichteten Abschnitten 103, 203 der beiden Formteile sind die zugeordneten Steigleitungen 12, 22, 32 mittels Befestigungselementen 16 fixiert, wie dies auch in Fig. 1 dargestellt ist. Ferner ist ein Handgriff 17 an den Formteilen 10, 20 im Bereich der horizontalen Abschnitte 102, 202 angebracht. Mit dem Handgriff 17 wird die Handhabung der Heberanordnung beim Ein- bzw. Ausbau am Klärbehälter vereinfacht.

Wie aus Fig. 2 ersichtlich, weisen die abwärts gerichteten Abschnitte 103, 203 einen rechteckigen Querschnitt auf, wobei sie etwa im unteren Drittel der Gesamterstreckung der Heberanordnung offen sind. Die jeweiligen beiden Formteile 10 und 20 weisen ferner an ihren abwärts gerichteten Abschnitten 103, 203 verlängerte Rückwände 104, 204 auf, die gleichzeitig als Aufstellstützen für die Heberanordnung dienen. Das untere Ende der ersten verlängerten Rückwand 104 steht also beim bestimmungsgemäßen Gebrauch im Klärbehälter 5 auf dem Boden der Vorklärkammer 51 auf. Entsprechend steht das untere Ende der zweiten verlängerten Rückwand 204 auf dem Boden der Belebungskammer 52 auf. Somit ist gewährleistet, dass auch die unteren Rohrbögen vom ersten, zweiten und dritten Zulauf 11, 21, 31 sowie die zugeordneten Steigleitungen 12, 22, 32 sicher gehaltert und vor Beschädigungen, insbesondere beim Ein- und Ausbau der gesamten Heberanordnung geschützt sind. Ferner ist eine genaue Höhenlagedefinition durch das Aufstellen der verlängerten Rückwände 104 und 204 gegeben.

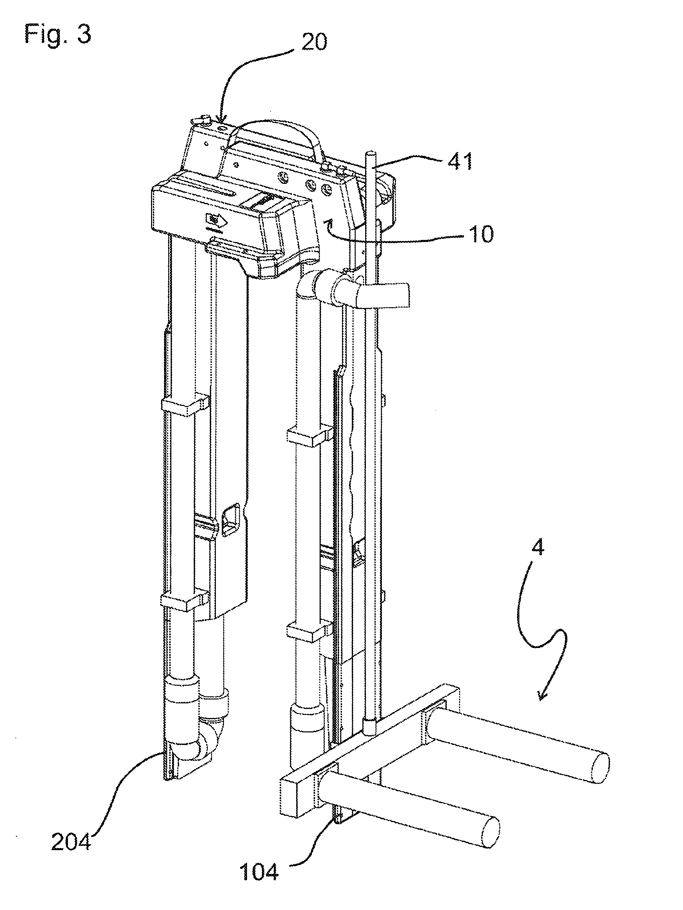

In einer weiteren Ausführungsform gemäß Fig. 3 ist die Heberanordnung gemäß Fig. 2 mit einem Belüfter 4 ausgestattet. Der Belüfter 4 ist am unteren Ende der ersten verlängerten Rückwand 104 befestigt. Zur Zuführung der Druckluft ist eine Druckluftzuleitung 41 außenseitig entlang des ersten abwärts gerichteten Abschnitts 103 des ersten Formteils 10 angesetzt. Bevorzugt hat die Druckluftzuleitung 41 am oberen Ende eine Schnellkupplung, um den Anschlussaufwand nach Einsetzen der Heberanordnung in dem Klärbehälter zu minimieren. Der Belüfter 4 besteht beispielsweise aus einem handelsüblichen Membranbelüfter mit zwei Belüfterkerzen, die einen feinblasigen Lufteintrag in die Belebungskammer 52 erlauben. Bevorzugt ist auch mit vormontierten Belüfter 4 der horizontale Querschnitt der Heberanordnung kleiner als die Mannlochöffnung des Klärbehälters 5. Ggf. kann die Heberanordnung auch durch Ankippen und Einfädeln durch das Mannloch in den Klärbehälter 5 eingeführt werden.

Mit der erfindungsgemäßen Heberanordnung wird ein kompaktes Bauteil angegeben, das fertigungstechnisch leicht und damit kostengünstig herstellbar ist, einen großen Vorfertigungsgrad zulässt und somit vor Ort in den Klärbehälter durch die Einmannlochöffnung ohne großen Montageaufwand eingeführt werden kann. Das Besondere an der kompakten Heberanordnung ist, dass der erste Zulauf 11 für den Beschickungsheber 1 sowie der dritte Zulauf 31 für den Klarwasserheber 3 jeweils durch die beiden Formteile 10 bzw. 20 vom übrigen Bereich der Vorklärkammer 51 bzw. Belebungskammer 52 abgetrennt ist. Dabei handelt es sich um eine Abtrennung analog zu der sonst bekannten Tauchwandausbildung. Mit dieser Abtrennung wird vermieden, dass beim Beschicken der Belebungskammer über den Beschickungsheber 1 aufschwimmende Bestandteile aus der Vorklärkammer 51 in die Belebungskammer 52 gepumpt werden. Über den ersten Zulauf 11 können somit nur etwaige Schwimmteile aus dem minimalen Querschnittsbereich innerhalb des zweiten abwärts gerichteten Abschnitts 203 des zweiten Formteils 20 angesogen werden. Die übrige Flüssigkeitsoberfläche in der Vorklärkammer 51 ist von diesem Ansaugbereich durch die Wandungen des Formteils 20 abgetrennt.

Ebenso ist die Funktion auf der Seite der Belebungskammer 52 mit dem dritten Zulauf 31 für den Klarwasserheber 3, der innerhalb des ersten abwärts gerichteten Abschnitts 103 des ersten Formteils 10 angeordnet ist. Etwaige sich in der Belebungskammer bildende Schwimmschichten können nur begrenzt auf die minimale Querschnittsfläche des ersten abwärts gerichteten Abschnitts 103 von dem dritten Zulauf 31 angesogen werden. Die übrige Flüssigkeitsoberfläche der Belebungskammer 52 ist durch die Wandung des ersten Formteils 10 vom dritten Zulauf 31 abgetrennt, so dass bei einer Verringerung des Füllstandes der Belebungskammer 52 vom maximalen Füllstand Yₘₐₓ zum minimalen Füllstand Yₘᵢₙ ein Absaugen von Schwimmteilen mit dem Klarwasserheber 3 vermieden wird. Neben den wirtschaftlichen Vorteilen ist somit auch die Reinigungsqualität, also die Qualität des Klarwassers durch eine starke Reduzierung der unerwünschten Mitförderung von Schwimmteilchen verbessert.

### Bezugszeichenliste

- 1: Beschickungsheber
- 10: erstes Formteil
- 100: erster Strömungskanal
- 101: erster höchster Punkt
- 102: erster horizontaler Abschnitt
- 103: erster abwärts gerichteter Abschnitt
- 104: erste verlängerte Rückwand
- 11: erster Zulauf
- 12: erste Steigleitung
- 13: erstes Tauchrohr
- 14: erste Druckluftzuführung
- 15: Kupplungsmittel
- 16: Befestigungselement
- 17: Handgriff

- 2: Schlammrückführungsheber
- 20: zweites Formteil
- 200: zweiter Strömungskanal
- 201: zweiter höchster Punkt
- 202: zweiter horizontaler Abschnitt
- 203: zweiter abwärts gerichteter Abschnitt
- 204: zweite verlängerte Rückwand
- 21: zweiter Zulauf
- 22: zweite Steigleitung
- 23: zweites Tauchrohr
- 24: zweite Druckluftzuführung

- 3: Klarwasserheber
- 31: dritter Zulauf
- 32: dritte Steigleitung

- 33: dritte Druckluftzuführung

- 4: Belüfter
- 41: Druckluftzuleitung

- 5: Klärbehälter
- 51: Vorklärkammer
- 52: Belebungskammer
- 53: Trennwand
- 54: Abwasserzulauf
- 55: Klarwasserablauf

- X: Füllstand der Vorklärkammer
- Yₘₐₓ: maximaler Füllstand Belebungskammer
- Yₘᵢₙ: minimaler Füllstand Belebungskammer

## Patentansprüche

1. Heberanordnung für SBR-Kleinkläranlagen mit einem Klärbehälter (5), in dem mindestens eine Vorklärkammer (51) und mindestens eine Belebungskammer (52) sowie eine beide Kammern trennende Trennwand (53) angeordnet sind, mit wenigstens drei Drucklufthebern, nämlich einem Beschickungsheber (1), einem Schlammrückführungsheber (2), die jeweils die Trennwand (53) überbrückend im Klärbehälter (5) angeordnet sind, und einem Klarwasserheber (3), wobei
- der Beschickungsheber (1) einen ersten Zulauf (11) in der Vorklärkammer (51), eine erste Steigeleitung (12) sowie ein erstes Tauchrohr (13) zum beruhigten Einlauf in die Belebungskammer (52),
- der Schlammrückführungsheber (2) einen zweiten Zulauf (21) in der Belebungskammer (52), eine zweite Steigleitung (22) sowie ein zweites Tauchrohr (23) zum beruhigten Rücklauf des geförderten Schlamms in die Vorklärkammer (51) und
- der Klarwasserheber (3) einen dritten Zulauf (31) in der Belebungskammer (52) sowie eine dritte Steigleitung (32) aufweisen,
**dadurch gekennzeichnet, dass** ein erstes, einen ersten Strömungskanal (100) bildendes, hohles Formteil (10) vorgesehen ist, in das die erste Steigleitung (12) in einen höchsten Punkt (101) des ersten Strömungskanals (100) einmündet und bei dem ein erster abwärts gerichteter Abschnitt (103) des ersten Strömungskanals (100) das erste Tauchrohr (13) bildet, wobei der abwärts gerichtete Abschnitt (103) des ersten Strömungskanals (100) einen erweiterten Querschnitt hat und darin der dritte Zulauf (31) in vorgegebener Höhenlage angeordnet ist.

2. Heberanordnung für SBR-Kleinkläranlagen mit einem Klärbehälter (5), in dem mindestens eine Vorklärkammer (51) und mindestens eine Belebungskammer (52) sowie eine beide Kammern trennende Trennwand (53) angeordnet sind, mit wenigstens drei Drucklufthebern, nämlich einem Beschickungsheber (1), einem Schlammrückführungsheber (2), die jeweils die Trennwand (53) überbrückend im Klärbehälter (5) angeordnet sind, und einem Klarwasserheber (3), wobei
- der Beschickungsheber (1) einen ersten Zulauf (11) in der Vorklärkammer (51), eine erste Steigeleitung (12) sowie ein erstes Tauchrohr (13) zum beruhigten Einlauf in die Belebungskammer (52),
- der Schlammrückführungsheber (2) einen zweiten Zulauf (21) in der Belebungskammer (52), eine zweite Steigleitung (22) sowie ein zweites Tauchrohr (23) zum beruhigten Rücklauf des geförderten Schlamms in die Vorklärkammer (51) und
- der Klarwasserheber (3) einen dritten Zulauf (31) in der Belebungskammer (52) sowie eine dritte Steigleitung (32) aufweisen,
**dadurch gekennzeichnet, dass** ein zweites, einen zweiten Strömungskanal (200) bildendes, hohles Formteil (20) vorgesehen ist, in das die zweite Steigleitung (22) in einen zweiten höchsten Punkt (201) des zweiten Strömungskanals (200) einmündet und bei dem ein zweiter abwärts gerichteter Abschnitt (203) des zweiten Strömungskanals (200) das zweite Tauchrohr (23) bildet, wobei der zweite abwärts gerichtete Abschnitt (203) des zweiten Strömungskanals (200) einen erweiterten Querschnitt hat und darin der erste Zulauf (11) in vorgegebener Höhenlage angeordnet ist.

3. Heberanordnung nach Anspruch 1 und 2.

4. Heberanordnung nach Anspruch 1, 2 oder 3, **dadurch gekennzeichnet, dass** das erste (1) und/oder zweite Formteil (2) einen im Einbauzustand umgekehrt L-förmigen Strömungskanal (100, 200) aufweisen, mit einem die Trennwand (53) des Behälters (5) überbrückenden, im Wesentlichen horizontalen Abschnitt (102, 202) und dem abwärtsgerichteten Abschnitt (103, 203), der das zugeordnete Tauchrohr (13, 23) bildet.

5. Heberanordnung nach Anspruch 3 und 4, **dadurch gekennzeichnet, dass** das erste (1) und zweite (2) Formteil formidentisch sind und Kuppelmittel (15) vorgesehen sind, mit denen beide Formteile (1, 2) im Bereich der horizontalen Abschnitte (102, 202) miteinander verbindbar sind.

6. Heberanordnung nach Anspruch 5, **dadurch gekennzeichnet, dass** mit den Kuppelmitteln (15) der lichte Abstand zwischen den gegenüberstehenden, abwärts gerichteten Abschnitten (103, 203) beider Formteile (1, 2) einstellbar ist.

7. Heberanordnung nach einem der vorangehenden Ansprüche, **dadurch gekennzeichnet, dass** am ersten Formteil (1) außenseitig die zweite (22) sowie die dritte Steigleitung (32) und/oder am zweiten Formteil (2) die erste Steigleitung (12) mit jeweils zugeordneten Druckluftzuleitungen befestigt sind.

8. Heberanordnung nach einem der vorangehenden Ansprüche, **dadurch gekennzeichnet, dass** am ersten Formteil (1) außenseitig am ersten Tauchrohr (13) ein Belüfter (4) mit zugeordneter Druckluftzuleitung (41) angeordnet ist.

9. Heberanordnung nach einem der vorangehenden Ansprüche, **gekennzeichnet durch** einen maximalen horizontalen Querschnitt, der kleiner ist als eine Mannlochöffnung des Klärbehälters (5).

10. Heberanordnung nach einem der Ansprüche 7, 8 oder 9, **dadurch gekennzeichnet, dass** die Druckluftzuleitungen Schnellkupplungen aufweisen.

11. Heberanordnung nach einem der vorangehenden Ansprüche, **dadurch gekennzeichnet, dass** die Formteile (1, 2) aus PE, insbesondere im Rotationssintern, hergestellt sind.

12. Heberanordnung nach einem der vorangehenden Ansprüche, **dadurch gekennzeichnet, dass** eine Rücklaufsperre im dritten Zulauf (31) angeordnet ist.

13. Heberanordnung nach einem der vorangehenden Ansprüche, **dadurch gekennzeichnet, dass** in der Trennwand (53) auf Höhe des maximalen Füllstandes (X) der Vorklärkammer (51) ein Notüberlauf vorgesehen ist, wobei das zweite Formteil (20) mit seinem zweiten abwärts gerichteten Abschnitt (203) unmittelbar vor dem Notüberlauf angeordnet ist und koinzidierend zum Notüberlauf eine Öffnung aufweist.

14. Heberanordnung nach Anspruch 13, **dadurch gekennzeichnet, dass** das erste Formteil (10) mit seinem ersten abwärts gerichteten Abschnitt (103) unmittelbar hinter dem Notüberlauf angeordnet ist und koinzidierend zum Notüberlauf eine Öffnung aufweist.

## Claims

1. A lifter arrangement for SBR small sewage treatment plants having a filtering basin (5) in which there are arranged at least one preliminary settling chamber (51) and at least one aeration chamber (52) as well as a dividing wall (53) dividing both chambers, having at least three airlift pumps, namely a charging lifter (1), a sludge recirculation lifter (2), each of which are arranged in the filtering basin (5) in a manner so as to span the dividing wall (53), and a clarified-water lifter (3), wherein
- the charging lifter (1) has a first intake (11) in the preliminary settling basin (51), a first rising line (12) as well as a first immersion pipe (13) for calmed inflow into the aeration chamber (52),
- the sludge recirculation lifter (2) has a second intake (21) in the aeration chamber (52), a second rising line (22) as well as a second immersion pipe (23) for calmed return flow of the conveyed sludge into the preliminary settling chamber (51) and
- the clarified-water lifter (3) has a third intake (31) in the aeration chamber (52) as well as a third rising line (32),
**characterised in that** a first hollow shaped part (10) forming a first flow channel (100) is provided into which the first rising line (12) issues into a highest point (101) of the first flow channel (100) and with which a first downwards-directed portion (103) of the first flow channel (100) forms the first immersion pipe (13), wherein the downwards-directed portion (103) of the first flow channel (100) has a widened cross-section and the third intake (31) is arranged therein at a given height.

2. A lifter arrangement for SBR small sewage treatment plants having a filtering basin (5) in which there are arranged at least one preliminary settling chamber (51) and at least one aeration chamber (52) as well as a dividing wall (53) dividing both chambers, having at least three airlift pumps, namely a charging lifter (1), a sludge recirculation lifter (2), each of which are arranged in the filtering basin (5) in a manner so as to span the dividing wall (53), and a clarified-water lifter (3), wherein
- the charging lifter (1) has a first intake (11) in the preliminary settling chamber (51), a first rising line (12) as well as a first immersion pipe (13) for calmed inflow into the aeration chamber (52),
- the sludge recirculation lifter (2) has a second intake (21) in the aeration chamber (52), a second rising line (22) as well as a second immersion pipe (23) for calmed return flow of the conveyed sludge into the preliminary settling chamber (51) and
- the clarified-water lifter (3) has a third intake (31) in the aeration chamber (52) as well as a third rising line (32),
**characterised in that** a second hollow shaped part (20) forming a second flow channel (200) is provided into which the second rising line (22) issues into a second highest point (201) of the second flow channel (200) and with which a second downwards-directed portion (203) of the second flow channel (200) forms the second immersion pipe (23), wherein the second downwards-directed portion (203) of the second flow channel (200) has a widened cross-section and the first intake (11) is arranged therein at a given height.

3. A lifter arrangement according to claim 1 and 2.

4. A lifter arrangement according to claim 1, 2 or 3, **characterised in that** the first (1) and/or second (2) shaped part has/have a flow channel (100, 200), of an inverted L-shape in the installed state, with a substantially horizontal portion (102, 202) which spans the dividing wall (53) of the basin (5) and the downwards-directed portion (103, 203) which forms the associated immersion pipe (13, 23).

5. A lifter arrangement according to claim 3 and 4, **characterised in that** the first (1) and second (2) shaped part are identical in form and coupling means (15) are provided by means of which both shaped parts (1, 2) are connectable to one another in the region of the horizontal portions (102, 202).

6. A lifter arrangement according to claim 5, **characterised in that** the clear distance between the facing downwards-directed portions (103, 203) of both shaped parts (1, 2) is adjustable by means of the coupling means (15).

7. A lifter arrangement according to any one of the preceding claims, **characterised in that** the second (22) and the third (32) rising line are secured to the exterior of the first shaped part (1) and/or the first rising line (12) is secured to the second shaped part (2), together with respective associated compressed-air feed lines.

8. A lifter arrangement according to any one of the preceding claims, **characterised in that** a blower (4) with associated compressed-air feed line (41) is arranged on the first shaped part (1), on the exterior of the first immersion pipe (13).

9. A lifter arrangement according to any one of the preceding claims, **characterised by** a maximum horizontal cross-section which is smaller than a manhole opening of the filtering basin (5).

10. A lifter arrangement according to any one of claims 7, 8 or 9, **characterised in that** the compressed-air feed lines have quick-action couplings.

11. A lifter arrangement according to any one of the preceding claims, **characterised in that** the shaped parts (1, 2) are manufactured from PE, in particular using rotational sintering.

12. A lifter arrangement according to any one of the preceding claims, **characterised in that** a non-return device is arranged in the third intake (31).

13. A lifter arrangement according to any one of the preceding claims, **characterised in that** an emergency overflow is provided in the dividing wall (53), level with the maximum height of fill (X) of the preliminary settling chamber (51), wherein the second downwards-directed portion (203) of the second shaped part (20) is arranged directly before the emergency overflow and has an opening coinciding with the emergency overflow.

14. A lifter arrangement according to claim 13, **characterised in that** the first downwards-directed portion (103) of the first shaped part (10) is arranged directly after the emergency overflow and has an opening coinciding with the emergency overflow.

## Revendications

1. Système de levage pour des petites stations d'épuration de type RBS comportant une cuve d'épuration (5) dans laquelle sont agencées au moins une chambre de première décantation (51) et au moins une chambre de boues activées (52), ainsi qu'une cloison (53) séparant les deux chambres, comportant au moins trois élévateurs à air comprimé, à savoir un élévateur d'admission (1), un élévateur de renvoi des boues (2), lesquels sont disposés chacun dans la cuve d'épuration (5) en enjambant la cloison (53), et un élévateur pour eaux traitées (3),
- l'élévateur d'admission (1) comportant une première admission (11) dans la chambre de première décantation (51), une première conduite montante (12), ainsi qu'un premier tube plongeur (13) pour un afflux apaisé dans la chambre de boues activées (52),
- l'élévateur de renvoi des boues (2) comportant une deuxième admission (21) dans la chambre de boues activées (52), une deuxième conduite montante (22), ainsi qu'un deuxième tube plongeur (23) pour un renvoi apaisé des boues transportées vers la chambre de première décantation (51), et
- l'élévateur pour eaux traitées (3) comportant une troisième admission (31) dans la chambre de boues activées (52), ainsi qu'une troisième conduite montante (32),
**caractérisé en ce qu'**il est prévu une première pièce moulée (10) creuse formant un premier conduit de circulation (100), dans laquelle pièce moulée la première conduite montante (12) débouche dans le point le plus élevé (101) du premier conduit de circulation (100) et dans laquelle un premier tronçon (103), dirigé vers le bas, du premier conduit de circulation (100) forme le premier tube plongeur (13), le tronçon (103), dirigé vers le bas, du premier conduit de circulation (100) ayant une section élargie, et la troisième admission (31) étant disposée dans celui-ci dans une position en hauteur prédéfinie.

2. Système de levage pour de petites stations d'épuration de type RBS comportant une cuve d'épuration (5), dans laquelle sont agencées au moins une chambre de première décantation (51) et au moins une chambre de boues activées (52), ainsi qu'une cloison (53) séparant les deux chambres, comportant au moins trois élévateurs à air comprimé, à savoir un élévateur d'admission (1), un élévateur de renvoi des boues (2), lesquels sont disposés chacun dans la cuve d'épuration (5) en enjambant la cloison (53), et un élévateur pour eaux traitées (3),
- l'élévateur d'admission (1) comportant une première admission (11) dans la chambre de première décantation (51), une première conduite montante (12), ainsi qu'un premier tube plongeur (13) pour un afflux apaisé dans la chambre de boues activées (52),
- l'élévateur de renvoi des boues (2) comportant une deuxième admission (21) dans la chambre de boues activées (52), une deuxième conduite montante (22), ainsi qu'un deuxième tube plongeur (23) pour un renvoi apaisé des boues transportées vers la chambre de première décantation (51), et
- l'élévateur pour eaux traitées (3) comportant une troisième admission (31) dans la chambre de boues activées (52), ainsi qu'une troisième conduite montante (32),
**caractérisé en ce qu'**il est prévu une deuxième pièce moulée (20) creuse formant un deuxième conduit de circulation (200), dans laquelle pièce moulée la deuxième conduite montante (22) débouche dans un deuxième point le plus élevé (201) du deuxième conduit de circulation (200) et dans laquelle un deuxième tronçon (203), dirigé vers le bas, du deuxième conduit de circulation (200) forme le deuxième tube plongeur (23), le deuxième tronçon (203), dirigé vers le bas, du deuxième conduit de circulation (200) ayant une section élargie et la première admission (11) étant disposée dans celui-ci dans une position en hauteur prédéfinie.

3. Système de levage selon les revendications 1 et 2.

4. Système de levage selon la revendication 1, 2 ou 3, **caractérisé en ce que** la première (**10**) et/ou la deuxième pièce moulée (**20**) comportent un conduit de circulation (100, 200) qui, dans la position montée, est en forme de L inversé, avec un tronçon (102, 202) sensiblement horizontal, qui enjambe la cloison (53) de la cuve (5), et le tronçon (103, 203) dirigé vers le bas qui forme le tube plongeur (13, 23) correspondant.

5. Système de levage selon les revendications 3 et 4, **caractérisé en ce que** la première (**10**) et/ou la deuxième pièce moulée (**20**) sont de formes identiques, et il est prévu des moyens de couplage (15) à l'aide desquels les deux pièces moulées (**10, 20**) peuvent être assemblées l'une à l'autre dans la zone des tronçons (102, 202) horizontaux.

6. Système de levage selon la revendication 5, **caractérisé en ce que** l'écartement entre les tronçons (103, 203), dirigés vers le bas et se faisant face, des deux pièces moulées (**10, 20**) peut être réglée avec les moyens de couplage (15).

7. Système de levage selon l'une des revendications précédentes, **caractérisé en ce que** la deuxième (22) et la troisième conduite montante (32) sont fixées sur la face extérieure de la première pièce moulée (**10**) et/ou la première conduite montante (12) est fixée sur la pièce moulée (**20**), à chaque fois avec les conduites d'amission d'air comprimé correspondantes.

8. Système de levage selon l'une des revendications précédentes, **caractérisé en ce qu'**un aérateur (4) avec la conduite d'admission d'air comprimé (41) correspondante est agencé sur la face extérieure de la première pièce moulée (**10**), au niveau du premier tube plongeur (13).

9. Système de levage selon l'une des revendications précédentes, **caractérisé par** une section horizontale maximale qui est inférieure à celle d'un regard de visite de la cuve d'épuration (5).

10. Système de levage selon l'une des revendications 7, 8 ou 9, **caractérisé en ce que** les conduites d'admission d'air comprimé comportent des raccords rapides.

11. Système de levage selon l'une des revendications précédentes, **caractérisé en ce que** les pièces moulées (**10, 20**) sont réalisées en PE, en particulier selon un procédé de moulage par centrifugation.

12. Système de levage selon l'une des revendications précédentes, **caractérisé en ce qu'**un clapet anti-retour est agencé dans la troisième admission (31).

13. Système de levage selon l'une des revendications précédentes, **caractérisé en ce qu'**il est prévu un trop-plein de secours dans la cloison (53) à la hauteur du niveau de remplissage maximum (X) de la chambre de première décantation (51), la deuxième pièce moulée (20) avec son deuxième tronçon (203) dirigé vers le bas étant agencée directement devant le trop-plein de secours et comportant une ouverture coïncidant avec le trop-plein de secours.

14. Système de levage selon la revendication 13, **caractérisé en ce que** la première pièce moulée (10) avec son premier tronçon (103) dirigé vers le bas est agencée directement derrière le trop-plein de secours et comporte une ouverture coïncidant avec le trop-plein de secours.
